# EUROPEAN PATENT APPLICATION

(11) **EP 3 260 668 A1**
(43) Date of publication of application: **27.12.2017**
(21) Application number: 17176492.1
(22) Date of filing: 16.06.2017
(51) Int. Cl.: F01D 25/20, F02C 7/06

(54) **LUBRICATION SYSTEM WITH MULTIPLE LUBRICATION CIRCUITS**

(30) Priority: 20.06.2016 US 201615187155
(71) Applicant: United Technologies Corporation, Farmington, CT 06032 (US)
(72) Inventor: SUCIU, Gabriel L., Glastonbury, CT 06033 (US); McCUNE, Michael E., Colchester, CT 06415 (US)
(74) Representative: Gittins, Alex Michael

(57) **Abstract**

A system (68) for a turbine engine (20) includes a first bearing (50, 51, 66), a second bearing (52), a first rotating assembly, a second rotating assembly, a first lubrication circuit (82) and a second lubrication circuit (84). The first rotating assembly includes a first component (44, 46, 47) rotatably supported by the first bearing (50, 51, 66). The second rotating assembly includes a second component (48) rotatably supported by the second bearing (52). The first lubrication circuit includes a first pump (90) and the first bearing (50, 51, 66). The first pump (90) is driven by the first rotating assembly and configured to pump lubricant to the first bearing (50, 51, 66). The second lubrication circuit (84) includes a second pump (102) and the second bearing (52). The second pump (102) is configured to pump lubricant to the second bearing (52). The second lubrication circuit (84) is configured discrete from the first lubrication circuit (82).

## Description

### BACKGROUND OF THE INVENTION

### 1. Technical Field

This disclosure relates generally to a gas turbine engine and, more particularly, to a lubrication system with multiple pumps.

### 2. Background Information

A gas turbine engine includes numerous bearings as well as a lubrication system to lubricate the bearings as well as other components of the gas turbine engine. Various types and configurations of lubrication systems are known in the art. While known lubrication systems have various advantages, there is still room in the art for improvement. In particular, there is a need in the art for an improved lubrication system which reduces cost, complexity and/or weight of a gas turbine engine.

### SUMMARY OF THE DISCLOSURE

According to an aspect of the present disclosure, a system is provided for a turbine engine. This turbine engine system includes a first bearing, a second bearing, a first rotating assembly, a second rotating assembly, a first lubrication circuit and a second lubrication circuit. The first rotating assembly includes a first component rotatably supported by the first bearing. The second rotating assembly includes a second component rotatably supported by the second bearing. The first lubrication circuit includes a first pump and the first bearing. The first pump is driven by the first rotating assembly and configured to pump lubricant to the first bearing. The second lubrication circuit includes a second pump and the second bearing. The second pump is configured to pump lubricant to the second bearing. The second lubrication circuit is configured discrete from the first lubrication circuit.

According to another aspect of the present disclosure, another system is provided for a turbine engine. This turbine engine system includes a first bearing, a second bearing, a first rotating assembly, a second rotating assembly, a first lubrication circuit and a second lubrication circuit. The first rotating assembly includes a first component rotatably supported by the first bearing. The second rotating assembly includes a second component rotatably supported by the second bearing. The first lubrication circuit includes a first pump and the first bearing. The first pump is driven by the first rotating assembly and configured to pump lubricant to the first bearing during nominal operation of the turbine engine. The second lubrication circuit includes a second pump and the second bearing. The second pump is configured to pump lubricant to the second bearing during the nominal operation of the turbine engine.

According to still another aspect of the present disclosure, another system is provided for a turbine engine. This turbine engine system includes a first rotating assembly, a second rotating assembly, a first lubrication circuit and a second lubrication circuit. The first rotating assembly includes a fan rotor, a first compressor rotor and a first turbine rotor mechanically coupled to the fan rotor and the first compressor rotor. A first component of the first rotating assembly is rotatably supported by a first bearing. The second rotating assembly includes a second compressor rotor and a second turbine rotor mechanically coupled to the second compressor rotor. A second component of the second rotating assembly is rotatably supported by a second bearing. The first lubrication circuit includes a first pump and the first bearing. The first pump is driven by the first rotating assembly and configured to pump lubricant to the first bearing. The second lubrication circuit includes a second pump and the second bearing. The second pump is configured to pump lubricant to the second bearing. The second lubrication circuit is configured discrete from the first lubrication circuit and the first bearing during nominal operation of the turbine engine.

The first pump may be configured to pump lubricant to the first bearing during nominal operation of the turbine engine. The second pump may be configured to pump lubricant to the second bearing during the nominal operation of the turbine engine.

The first rotating assembly may include a fan rotor. The first pump may be configured to pump lubricant to the first bearing during wind milling of the fan rotor.

The system may include a lubricant reservoir. The first lubrication circuit and the second lubrication circuit may be configured in parallel with one another and fluidly coupled with the lubricant reservoir.

The first lubrication circuit may be fluidly isolated from the second lubrication circuit.

The first lubrication circuit may include a first lubricant. The second lubrication circuit may include a second lubricant. The first lubricant may be different from (or the same as) the second lubricant.

The first bearing may be configured as or otherwise include a thrust bearing.

The first bearing may be configured as or otherwise include a journal bearing.

The first rotating assembly may include a gear system that includes the first component.

The first rotating assembly may include a compressor rotor and a turbine rotor. The first component may be a shaft connected between the compressor rotor and the turbine rotor.

The first rotating assembly may include a fan rotor, a gear system, a first shaft, a first compressor rotor and a first turbine rotor. The first shaft may be connected between the first compressor rotor and the first turbine rotor, and may be connected to the fan rotor through the gear system. The first component may include a component of the gear system or the first shaft.

The system may include a third bearing supporting the first shaft, the third bearing included in and lubricated by first lubrication circuit. The first component may include the component of the gear system.

The second rotating assembly may include a second compressor rotor and a second turbine rotor. The second component may include a second shaft that is connected between the second compressor rotor and the second turbine rotor.

The second pump may be driven by the second rotating assembly.

The second pump may be an electric pump.

The first rotating assembly may include a fan rotor. The first pump may be configured to pump lubricant to the first bearing during wind milling of the fan rotor.

The second lubrication circuit may be configured discrete from the first lubrication circuit.

The first rotating assembly may include a fan rotor, a gear system, a first shaft, a first compressor rotor and a first turbine rotor. The first shaft may be connected between the first compressor rotor and the first turbine rotor, and may be connected to the fan rotor through the gear system. The first component may include a component of the gear system or the first shaft.

The second rotating assembly may include a second compressor rotor and a second turbine rotor. The second component may include a second shaft that is connected between the second compressor rotor and the second turbine rotor.

The foregoing features and the operation of the invention will become more apparent in light of the following description and the accompanying drawings.

### BRIEF DESCRIPTION OF THE DRAWINGS

FIG. 1 is a side cutaway illustration of an embodiment of a geared turbine engine.
FIG. 2 is a side sectional illustration of a portion of the geared turbine engine of FIG. 1, which includes a gear train.
FIG. 3 is a cross-sectional illustration of the gear train of FIG. 2.
FIG. 4 is a schematic illustration of an embodiment of a system for the geared turbine engine which includes fluidly discrete lubrication circuits.
FIG. 5 is a schematic illustration of another embodiment of a system for the geared turbine engine which includes fluidly isolated lubrication circuits.

### DETAILED DESCRIPTION OF THE INVENTION

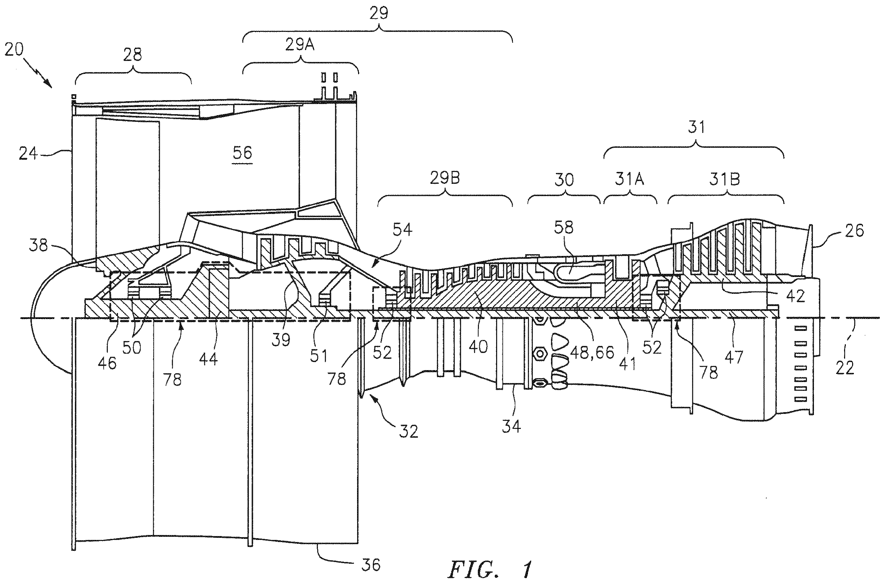

FIG. 1 is a side cutaway illustration of a geared turbine engine 20. This turbine engine 20 extends along an axial centerline 22 between an upstream airflow inlet 24 and a downstream airflow exhaust 26. The turbine engine 20 includes a fan section 28, a compressor section 29, a combustor section 30 and a turbine section 31. The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B.

The engine sections 28-31 are arranged sequentially along the centerline 22 within an engine housing 32. This housing 32 includes an inner case 34 (e.g., a core case) and an outer case 36 (e.g., a fan case). The inner case 34 may house one or more of the engine sections 29-31; e.g., an engine core. The outer case 36 may house at least the fan section 28.

Each of the engine sections 28, 29A, 29B, 31A and 31B includes a respective rotor 38-42. Each of these rotors 38-42 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 38 is connected to a gear train 44, for example, through a fan shaft 46. The gear train 44 and the LPC rotor 39 are connected to and driven by the LPT rotor 42 through a low speed shaft 47. The HPC rotor 40 is connected to and driven by the HPT rotor 41 through a high speed shaft 48. In this manner, the components 38, 39, 42, 46 and 47 are configured into a first (e.g., low speed) rotating assembly and the components 40, 41 and 48 are configured into a second (e.g., high speed) rotating assembly. The shafts 46-48 and/or other components of the rotating assemblies are rotatably supported by a plurality of bearings 50-52; e.g., rolling element and/or thrust bearings. Each of these bearings 50-52 is connected to the engine housing 32 by at least one stationary structure such as, for example, an annular support strut.

During operation, air enters the turbine engine 20 through the airflow inlet 24. This air is directed through the fan section 28 and into a core gas path 54 and a bypass gas path 56. The core gas path 54 extends sequentially through the engine sections 29A, 29B, 30, 31A and 31B. The bypass gas path 56 extends away from the fan section 28 through a bypass duct, which circumscribes and bypasses the engine core. The air within the core gas path 54 may be referred to as "core air". The air within the bypass gas path 56 may be referred to as "bypass air".

The core air is compressed by the compressor rotors 39 and 40 and directed into a combustion chamber 58 of a combustor in the combustor section 30. Fuel is injected into the combustion chamber 58 and mixed with the compressed core air to provide a fuel-air mixture. This fuel air mixture is ignited and combustion products thereof flow through and sequentially cause the turbine rotors 41 and 42 to rotate. The rotation of the turbine rotors 41 and 42 respectively drive rotation of the compressor rotors 40 and 39 and, thus, compression of the air received from a core airflow inlet. The rotation of the turbine rotor 42 also drives rotation of the fan rotor 38 through the gear train 44, which propels bypass air through and out of the bypass gas path 56. The propulsion of the bypass air may account for a majority of thrust generated by the turbine engine 20, e.g., more than seventy-five percent (75%) of engine thrust. The turbine engine 20 of the present disclosure, however, is not limited to the foregoing exemplary thrust ratio.

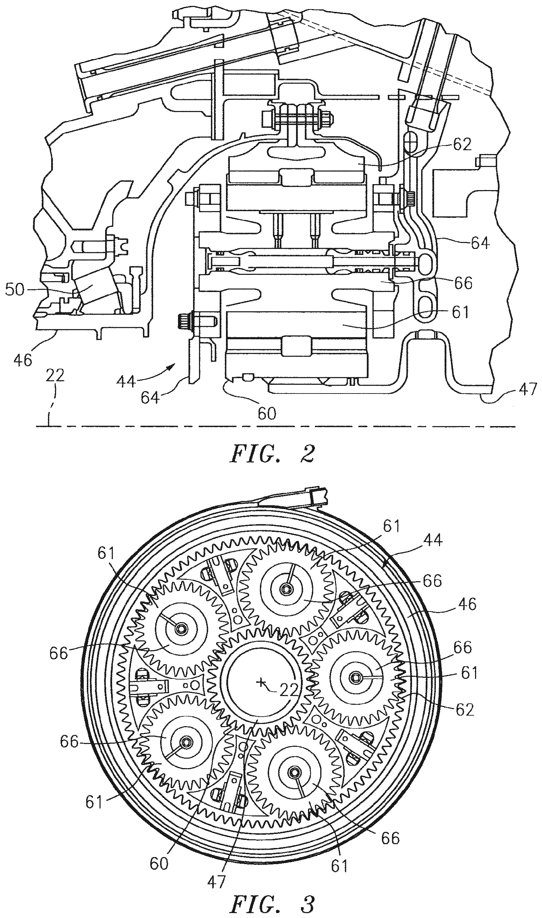

The gear train 44 is configured to interconnect and provide a rotational speed reduction between the LPT rotor 42 and the fan rotor 38. For example, referring to FIGS. 2 and 3, the gear train 44 may include a plurality of gears 60-62 arranged in a star gear train configuration. Alternatively, the gears 60-62 may be arranged in a planetary gear train configuration, or any other type of gear train configuration.

The gears of FIGS. 2 and 3 include a sun gear 60, one or more intermediate gears 61 (e.g., either star gears as shown or planetary gears) and a ring gear 62. The sun gear 60 is rotatable about the centerline 22. The sun gear 60 is connected to the low speed shaft 47 through a joint such as, but not limited to, a spline joint. The star gears 61 are arranged circumferentially around the sun gear 60 and the centerline 22. The star gears 61 are radially meshed between the sun gear 60 and the ring gear 62. Each of the star gears 61 is rotatably connected to a gear carrier 64 and rotatably supported by a respective bearing 66. This bearing 66 may be a journal bearing as shown in FIGS. 2 and 3, or alternatively any other type of bearing such as a rolling element bearing. The gear carrier 64 is connected to the engine housing 32 (e.g., the inner case 34; see FIG. 1) through a stationary support structure. The ring gear 62 is connected to the fan shaft 46 through a joint such as, but not limited to, a bolted flange joint.

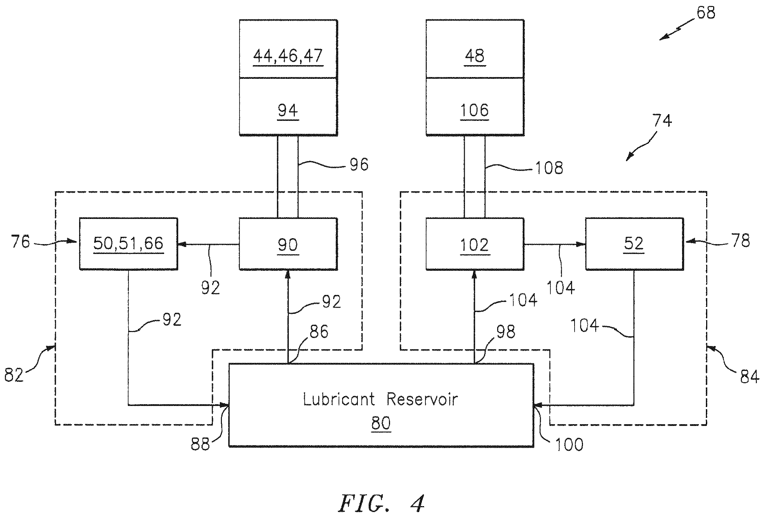

FIG. 4 is a schematic illustration of a system 68 of the turbine engine 20 of FIG. 1. This turbine engine system 68 includes one or more components (e.g., 44, 46 and 47) of the first rotating assembly. The turbine engine system 68 includes at least one component (e.g., 48) of the second rotating assembly. The turbine engine system 68 also includes a lubrication system 74 configured to lubricate one or more of the bearings (e.g., 50, 51, 52 and 66), where the bearings 50, 51 and 66 are in a first bearing compartment 76 and the bearings 52 are in one or more other bearing compartments 78 (see also FIGS. 1 and 2). The lubrication system 74 is configured as a multi-circuit system and includes a lubricant reservoir 80 (e.g., a tank, a sump, a fluid container), a first lubrication circuit 82 and a second lubrication circuit 84.

The first lubrication circuit 82 extends between a first inlet 86 and a first outlet 88, which inlet 86 and outlet 88 are fluidly coupled with the reservoir 80. The first lubrication circuit 82 includes a lubricant first pump 90 and one or more of the bearings (e.g., 50, 51 and 66). These first lubrication circuit components 90 and 50, 51, 66 are arranged sequentially inline between the first inlet 86 and the first outlet 88. More particularly, the first lubrication circuit components 90 and 50, 51, 66 are respectively serially fluidly coupled together by inter-circuit first flowpaths 92. Each first flowpath 92 may be configured as or include a conduit, a pipe, a hose and/or any type of fluid passage (e.g., channel, cavity, etc.) formed by another structure.

The first pump 90 is configured as a mechanical pump. This first pump 90 is mechanically coupled to and, thereby, driven by a component of the first rotating assembly. For example, the first pump 90 may be mechanically coupled to the low speed shaft 47 through a first accessory gearbox 94 and a first drivetrain 96 (e.g., a tower shaft).

The second lubrication circuit 84 extends between a second inlet 98 and a second outlet 100, which inlet 98 and outlet 100 are fluidly coupled with the reservoir 80. The second lubrication circuit 84 includes a lubricant second pump 102 and one or more of the bearings (e.g., 52). These second lubrication circuit components 102 and 52 are arranged sequentially inline between the second inlet 98 and the second outlet 100. More particularly, the second lubrication circuit components 102 and 52 are respectively serially fluidly coupled together by inter-circuit second flowpaths 104. Each second flowpath 104 may be configured as or include a conduit, a pipe, a hose and/or any type of fluid passage (e.g., channel, cavity, etc.) formed by another structure.

The second pump 102 is configured as a mechanical pump. This second pump 102 is mechanically coupled to and, thereby, driven by a component of the second rotating assembly. For example, the second pump 102 may be mechanically coupled to the high speed shaft 48 through a second accessory gearbox 106 and a second drivetrain 108 (e.g., a tower shaft).

The second lubrication circuit 84 is configured fluidly parallel with the first lubrication circuit 82. The second lubrication circuit 84 is also thereby fluidly discrete from the first lubrication circuit 82. For example, the lubrication system 74 embodiment of FIG. 4 does not include any inter-circuit connections between the inlets 86, 98 and the outlets 88, 100. Rather, the only connection between the circuits 82 and 84 shown in the FIG. 4 embodiment is through the reservoir 80, which is not within the circuits 82 and 84 between the inlets 86, 98 and the outlets 88, 100.

With the above described lubrication system 74 configuration, the first lubrication circuit 82 is configured to service (e.g., exclusively lubricate relative to circuit 84) the bearings 50, 51 and 66 during nominal operation of the turbine engine 20; e.g., aircraft takeoff, aircraft landing, aircraft taxiing, aircraft flight at cruise, etc. The second lubrication circuit 84 is configured to service (e.g., exclusively lubricate relative to circuit 82) the bearings 52 during the nominal operation of the turbine engine 20. A flow of lubricant through each lubrication circuit 82, 84 may therefore be proportional to the rotational speed of the components being supported by the bearings in that circuit 82, 84 and, thus, specified lubrication requirements for those bearings. This also enables use of smaller and more tailored pumps 90, 102. In contrast, where the rotational speed is not proportional to the specified lubrication requirements, a lubricant pump may be oversized in order to pump enough lubricant at lower rotational speeds.

In addition to the foregoing, since the bearings 50, 51 and 66 receive lubricant from the first pump 90 which is driven by the first rotating assembly, the first lubrication circuit 82 may also service the bearings 50, 51 and 66 during non-nominal operation of the turbine engine 20; e.g., during fan rotor 38 wind milling conditions, etc. Thus, the first lubrication circuit 82 may replace sometimes complicated, expensive and/or heavy auxiliary lubrications systems which may otherwise be required to lubricate certain components during the non-nominal operation of the turbine engine 20.

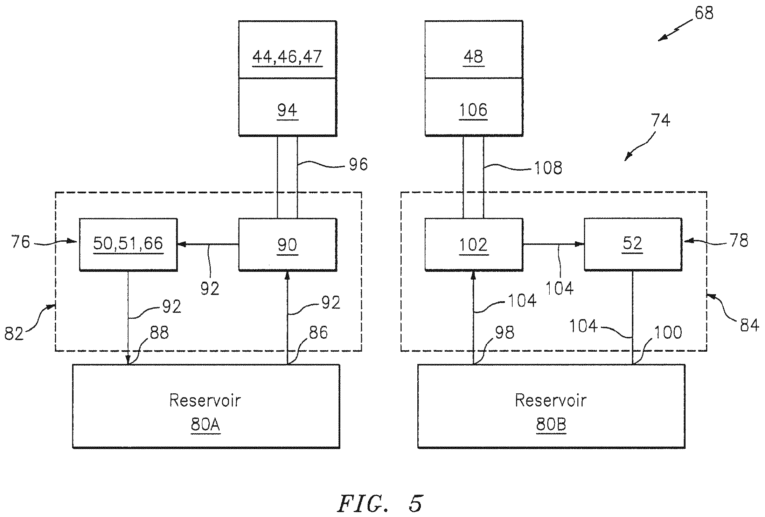

In some embodiments, referring to FIG. 5, the first lubrication circuit 82 may be fluidly isolated from the second lubrication circuit 84. The lubrication system 74 of FIG. 5, for example, replaces the reservoir 80 of FIG. 4 with a first reservoir 80A and a second reservoir 80B. The first and the second reservoirs 80A and 80B are separate and discrete; e.g., fluidly decoupled and distinct. The first reservoir 80A is fluidly coupled between the first inlet 86 and the first outlet 88. The second reservoir 80B is fluidly coupled between the second inlet 98 and the second outlet 100. In such an embodiment, the first reservoir 80A may contain a first type of lubricant and the second reservoir 80B may contain a second type of lubricant that is different than the first type. For example, the first reservoir 80A may contain a relatively high viscosity lubricant (e.g., oil). The second reservoir 80B may contain a high thermal stability (HTS) lubricant (e.g., oil). Such a HTS lubricant is operable to withstand relatively high temperatures associated with bearings 52 located in the turbine section 31, but typically may have a lower viscosity. Of course, the present disclosure is not limited to the foregoing exemplary lubricants. Furthermore, in other embodiments, the lubricant within the reservoirs 80A and 80B may be the same.

In some embodiments, the second pump 102 may be configured as an electric pump.

In some embodiments, the first lubrication circuit 82 and the second lubrication circuit 84 may each include one or more additional components. Examples of such additional components include, but are not limited to, a filter, a sensor, a manifold, another lubricant reservoir, another lubricant pump, etc.

In some embodiments, the bearings 50, 51 and 66 may be fluidly configured in parallel with one another. In other embodiments, one or more of the bearings 50, 51 and/or 66 may be fluidly configured in series with one another.

In some embodiments, the bearings 52 may be fluidly configured in parallel with one another. In other embodiments, one or more of the bearings 52 may be fluidly configured in series with one another.

In some embodiments, the lubrication system 74 may also be configured as a heat exchange system. For example, the lubricant in the first lubrication circuit 82 and/or the second lubrication circuit 84 may be routed through another element to exchange thermal energy therewith.

In some embodiments, the first pump 90 may be located upstream of the bearings 50, 51 and 66 as illustrated in FIG. 4. Alternatively, the first pump 90 may be located downstream of the bearings 50, 51 and 66, or between two serially fluidly adjacent bearings 50, 51,66.

In some embodiments, the second pump 102 may be located upstream of the bearings 52 as illustrated in FIG. 4. Alternatively, the second pump 102 may be located downstream of the bearings 52, or between two serially fluidly adjacent bearings 52.

In some embodiments, the first pump 90 may be configured with a rotor lock. This rotor lock may be configured to selectively engage so as to prevent rotation of the first rotating assembly, for example, when an aircraft is parked on a runway to prevent fan rotor 38 wind milling.

The turbine engine system 68 may be included in various turbine engines other than the one described above. The turbine engine system 68, for example, may be included in a geared turbine engine where a gear train connects one or more shafts to one or more rotors in a fan section, a compressor section and/or any other engine section. Alternatively, the turbine engine system 68 may be included in a turbine engine configured without a gear train. The turbine engine system 68 may be included in a geared or non-geared turbine engine configured with two spools (e.g., see FIG. 1) or with more than two spools. The turbine engine may be configured as a turbofan engine, a turbojet engine, a propfan engine, a pusher fan engine or any other type of turbine engine. The present invention therefore is not limited to any particular types or configurations of turbine engines.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A system (68) for a turbine engine (20), comprising:
a first bearing (50, 51, 66) and a second bearing (52);
a first rotating assembly including a first component (44, 46, 47) rotatably supported by the first bearing (50, 51, 66);
a second rotating assembly including a second component (48) rotatably supported by the second bearing (52);
a first lubrication circuit (82) comprising a first pump (90) and the first bearing (50, 51, 66), the first pump (90) driven by the first rotating assembly and configured to pump lubricant to the first bearing (50, 51, 66); and
a second lubrication circuit (84) comprising a second pump (102) and the second bearing (52), the second pump (102) configured to pump lubricant to the second bearing (52), wherein the second lubrication circuit (84) is configured discrete from the first lubrication circuit (82).

2. The system (68) of claim 1, wherein
the first pump (90) is configured to pump lubricant to the first bearing (50, 51, 66) during nominal operation of the turbine engine (20); and
the second pump (102) is configured to pump lubricant to the second bearing (52) during the nominal operation of the turbine engine (20).

3. The system (68) of claim 2, wherein
the first rotating assembly further includes a fan rotor (38); and
the first pump (90) is configured to pump lubricant to the first bearing (50, 51, 66) during wind milling of the fan rotor (38).

4. The system (68) of claim 1, 2 or 3, further comprising:
a lubricant reservoir (80);
wherein the first lubrication circuit (82) and the second lubrication circuit (84) are configured in parallel with one another and fluidly coupled with the lubricant reservoir (80).

5. The system (68) of any preceding claim, wherein the first lubrication circuit (82) is fluidly isolated from the second lubrication circuit (84), wherein, optionally, the first lubrication circuit (82) includes a first lubricant, the second lubrication circuit (84) includes a second lubricant, and the first lubricant is different from the second lubricant.

6. The system (68) of any preceding claim, wherein the first bearing (50, 51, 66) comprises:
a thrust bearing; or
a journal bearing.

7. The system (68) of any preceding claim, wherein the first rotating assembly further includes a gear system (44) that includes the first component (44).

8. The system (68) of any of claims 1 to 6, wherein
the first rotating assembly further includes a compressor rotor (39) and a turbine rotor (42); and
the first component (47) is a shaft connected between the compressor rotor (39) and the turbine rotor (42).

9. The system (68) of any of claims 1 to 6, wherein
the first rotating assembly further includes a or the fan rotor (38), a gear system (44), a first shaft (47), a first compressor rotor (39) and a first turbine rotor (42);
the first shaft (47) is connected between the first compressor rotor (39) and the first turbine rotor (42), and is connected to the fan rotor (38) through the gear system (44); and
the first component (44, 47) comprises a component of the gear system (44) or the first shaft (47).

10. The system (68) of claim 9, further comprising:
a third bearing (51) supporting the first shaft (47), the third bearing (51) included in and lubricated by first lubrication circuit (82);
wherein the first component (44) comprises the component of the gear system (44).

11. The system (68) of claims 9 or 10, wherein
the second rotating assembly further includes a second compressor rotor (40) and a second turbine rotor (41); and
the second component (48) comprises a second shaft (48) that is connected between the second compressor rotor (40) and the second turbine rotor (41).

12. The system (68) of any preceding claim, wherein:
the second pump (102) is driven by the second rotating assembly; and/or
the second pump (102) is an electric pump.

13. A system (68) for a turbine engine (20), comprising:
a first bearing (50, 51, 66) and a second bearing (52);
a first rotating assembly including a first component (44, 46, 47) rotatably supported by the first bearing (50, 51, 66);
a second rotating assembly including a second component (48) rotatably supported by the second bearing (52);
a first lubrication circuit (82) comprising a first pump (90) and the first bearing (50, 51, 66), the first pump (90) driven by the first rotating assembly and configured to pump lubricant to the first bearing (50, 51, 66) during nominal operation of the turbine engine (20); and
a second lubrication circuit (84) comprising a second pump (102) and the second bearing (52), the second pump (102) configured to pump lubricant to the second bearing (52) during the nominal operation of the turbine engine (20), optionally wherein the second lubrication circuit (84) is configured discrete from the first lubrication circuit (82).

14. The system (68) of claim 13, wherein
the first rotating assembly further includes a fan rotor (38); and
the first pump (90) is configured to pump lubricant to the first bearing (50, 51, 66) during wind milling of the fan rotor (38); and/or
the first rotating assembly further includes a or the fan rotor (38), a gear system (44), a first shaft (47), a first compressor rotor (39) and a first turbine rotor (42);
the first shaft (47) is connected between the first compressor rotor (39) and the first turbine rotor (42), and is connected to the fan rotor (38) through the gear system (44); and
the first component (44, 47) comprises a component of the gear system (44) or the first shaft (47).

15. A system (68) for a turbine engine (20), comprising:
a first rotating assembly including a fan rotor (38), a first compressor rotor (39) and a first turbine rotor (42) mechanically coupled to the fan rotor (38) and the first compressor rotor (39), wherein a first component (44, 46, 47) of the first rotating assembly is rotatably supported by a first bearing (50, 51, 66);
a second rotating assembly including a second compressor rotor (40) and a second turbine rotor (41) mechanically coupled to the second compressor rotor (40), wherein a second component (48) of the second rotating assembly is rotatably supported by a second bearing (52);
a first lubrication circuit (82) comprising a first pump (90) and the first bearing (50, 51, 66), the first pump (90) driven by the first rotating assembly and configured to pump lubricant to the first bearing (50, 51, 66); and
a second lubrication circuit (84) comprising a second pump (102) and the second bearing (52), the second pump (102) configured to pump lubricant to the second bearing (52), wherein the second lubrication circuit (84) is configured discrete from the first lubrication circuit (82) and the first bearing (50, 51, 66) during nominal operation of the turbine engine (20).
